# EUROPÄISCHE PATENTSCHRIFT

(11) **EP 1 852 202 B1**
(45) Veröffentlichungstag und Bekanntmachung des Hinweises auf die Patenterteilung: **22.04.2009**
(21) Anmeldenummer: 07003250.3
(22) Anmeldetag: 15.02.2007
(51) Int. Cl.: B23B 51/02, E21B 10/44

(54) **Bohrkopf für Bohrwerkzeug und Bohrwerkzeug**
Drill head for drill and drill
Tête de forage pour un outil de forage et outil de forage

(30) Priorität: 03.05.2006 DE 102006020538
(43) Veröffentlichungstag der Anmeldung: 07.11.2007
(60) Teilanmeldung: 08003706.2
(73) Patentinhaber: Irwin Industrial Tools GmbH, 85399 Hallbergmoos (DE)
(72) Erfinder: Sian, Kirpal Singh, 85435 Erding (DE); Pedersen, Hans, 7760 Hurup (DK); Geier, Manfred, 82178 Puchheim (DE)
(74) Vertreter: Schmid, Nils T.F.

(56) Entgegenhaltungen:
- EP-A- 1 125 663
- EP-A- 1 125 664
- EP-A- 1 604 762
- EP-A1- 0 158 820
- EP-A1- 1 045 112
- EP-A2- 0 884 448

## Beschreibung

Die Erfindung betrifft einen Bohrkopf für ein Bohrwerkzeug, insbesondere einen Gestein- und/oder Betonbohrer. Bei Bohrungen von Gestein oder Beton hat der Bohrkopf die wesentlichen Bohrbelastungen zu ertragen, weswegen für den Bohrkopf zumeist ein Hartmetall verwendet wird. Der Bohrkopf soll einen effektiven Materialabtrag bei geringem Verschleiß erreichen.

Aus der DE 299 01 285 U1 ist beispielsweise ein Bohrwerkzeug mit einem Schaft und einem Bohrkopf bekannt, der mit einem Schlitz versehen ist, in welchem eine Bohrplatte angeordnet ist, die aus einem Hartmetall gefertigt ist. Die Abrasion von Gesteinsmaterial wird durch die Bohrplatte realisiert, welche stirnseitig eine in Seitenansicht V-förmige Hauptschneide aufweist. Um die Bohrplatte peripherieseitig zu verstärken, weist die in Draufsicht rechteckige Grundform der Bohrplatte radiale, dreiecksförmige Verbreiterungen auf. Es hat sich allerdings bei derartigen Bohrplatten gezeigt, daß bei Belastungsspitzen, wie bei dem Treffen des Bohrwerkzeugs auf eine Betonarmierung es zum Bruch der Bohrplatte insbesondere im Bereich des kantigen Übergangs der dreieckigen Verbreiterung in die rechteckige Grundform kommen kann.

Um die Festigkeit des Bohrkopfs zu erhöhen, ist es bekannt, so genannte Vollhartmetallköpfe einzusetzen, wie sie beispielsweise aus der DE 43 39 245 A1 bekannt sind. Der bekannte Vollhartmetallkopf kennzeichnet sich durch eine vieleckige symmetrische Form aus, die über eine Art Feder-Nutverbindung mit dem Stirnende eines Wendelschafts des Bohrwerkzeugs verbunden wird. Allerdings ergaben sich bei derartigen Vollhartmetallköpfen Schwierigkeiten einer festen Montage der Hartmetallköpfe an den Wendelschaft des Bohrwerkzeugs. Auch stellte der hohe Materialaufwand an Hartmetall zur Realisierung des Vollbohrkopfes einen nicht unerheblichen Kostenfaktor dar.

Ein alternativer Bohrkopf wird in dem EP 0 884 448 B1 vorgeschlagen, der einen im Wesentlichen prismatischen Körper mit einer bei einer Draufsicht im Wesentlichen X-förmigen Grundform aufweist. Der Bohrkopf hat eine Mittelachse, die im monierten Zustand des Bohrkopfs mit der Bohrwerkzeugachse zusammenfällt. Der Bohrkopf hat eine Montageseite, an welcher er an einem Stirnende des Bohrwerkzeugs anzubringen ist, insbesondere in eine entsprechende X-förmige Nut in dem Stirnende des Bohrwerkzeugs einzusetzen ist. Der Bohrkopf hat eine der Montage diametral gegenüberliegende Stirnseite, an der eine Hauptschneide und eine Nebenschneide ausgebildet sind. Des Weiteren hat der Bohrkopf zwei diametral gegenüberliegende, eine im Wesentlichen in Axialrichtung erstreckende Abfuhrnut begrenzende, V-förmige Seitenflächen, zu denen sich jeweils eine der beiden Förderwendeln des Schafts des Bohrwerkzeugs erstrecken. Schließlich umfaßt der Bohrkopf zwei diametral gegenüberliegende, in Axialrichtung erstreckende Peripherie-Seiten, die, in Umfangsrichtung des Bohrkopfs betrachtet, zwischen den beiden V-förmigen Seitenflächen liegen. Die Peripherie-Seiten sind umfänglich durch eine in Drehrichtung des Bohrkopfs nachlaufende Axialkante und eine radial zurückgesetzte, in Drehrichtung vorlaufende Axialkante begrenzt. In beiden Peripherie-Seiten sind für einen Abtransport von Bohrmehl von den jeweiligen Schneiden Nuten eingebracht. Eine Nebenschneide ist derart zur Hauptschneide angeordnet, daß sie peripherieseitig über der Hauptschneide axial vorsteht. Es zeigte sich, daß bei dem gattüngsgemäßen Bohrkopf aufgrund des markanten Nebenschneidenprofils Schwierigkeiten einer maßgenauen, wiederholbaren Fertigung des Bohrkopfs bestehen. Des Weiteren erschien die Effektivität des Bohrkopfs aufgrund eines mangelhaften Abtransports von Bohrmehl insbesondere von der Hauptschneide weg beeinträchtigt zu sein.

Aus EP 1 125 664 A2 sowie EP 1 125 663 A2 ist ein bei Draufsicht kreuzförmiger Bohrkopf aus Hartmetall bekannt, wobei ein Teil der Peripherieseite konvex geformt ist. Eine Nebenschneide erstreckt sich an einer Peripherieseite zur anderen unter Ausbildung mehrerer Krümmungen und Knicke.

Es ist Aufgabe der Erfindung, die Nachteile des Stands der Technik zu überwinden, insbesondere einen Bohrkopf insbesondere aus Hartmetall der gattungsgemäßen Art derart weiterzubilden, daß bei Beachtung geringer Herstellungskosten und langer Standzeit die Bohreffektivität erhöht wird.

Diese Aufgabe wird in einem ersten Erfindungsaspekt durch die Merkmale von Anspruch 1 gelöst. Danach umfaßt zumindest eine der Peripherie-Seiten des Bohrkopfs, vorzugsweise beide Peripherie-Seiten, eine radial konvexe Krümmung mit einem Radius bezüglich der Mittelachse, der in einer Umfangsrichtung des Bohrkopfs entlang der gesamten Peripherie-Seite kontinuierlich stetig abnimmt. Somit ist die Peripherie-Seite entsprechend der zu schaffenden Bohreffektivität trotz der abfuhrnutfreien Peripherie-Seite ein Abtransport von Bohrmehl über den Freiraum benachbart den V-förmigen Seitenflächen ausreicht, um eine effektive Abrasierung durch den Bohrkopf zu gewährleisten. Neben der vereinfachten Bauform bei Aufrechthaltung einer konstanten Bohrleistung konnte mit der erfindungsgemäßen Maßnahme die Standzeit des Bohrkopfs deutlich verlängert werden, weil durch die Abfuhrnut eingebrachte Schwachstellen an der Peripherie-Seite nunmehr entbehrt sind und die konvexe Peripherie-Seite eine saubere Führung des Bohrkopfs in der geschaffenen Bohrnut sicherstellt.

Bei einer bevorzugten Ausführung der Erfindung weist zumindest einer der Peripherie-Seiten, vorzugsweise beide Peripherie-Seiten, eine in Drehrichtung vorlaufende Axialkante und eine in Drehrichtung nachlaufende Axialkante auf, wobei der Radius der nachlaufenden Axialkante gegenüber dem Radius der vorlaufenden Axialkante radial zurückgesetzt ist und der Radius der Peripherie-Seite zwischen der vorlaufenden Axialkante und der nachlaufenden Axialkante der Radius geringfügig kontinuierlich stetig abnimmt. Der radiale Rückversatz der nachlaufenden Axialkante entspricht etwa weniger als 10 %, vorzugsweise etwa 8 %, des Mittelachsabstands der vorlaufenden Axialkante.

Ein mit dem oben genannten Erfindungsgegenstand kombinierbarer Erfindungsaspekt betrifft eine deutliche Verbesserung der Abrasionseffektivität des Bohrkopfs. Danach ist erfindungsgemäß eine Hauptschneide von der Mittelachse geradlinig und radial ausgerichtet. Die Hauptschneide erstreckt sich wie eine Diagonale der Stirnseite von der Mittelachse insbesondere in Radialrichtung knickfrei hin zu beiden Peripherie-Seiten. Vorzugsweise münden die Hauptschneiden bezüglich der Radialrichtung unterbrechungsfrei in die Peripherie-Seiten. Mit der erfindungsgemäßen Maßnahme wurde überraschenderweise auch eine ergonomische Verbesserung bei der Handhabung des mit dem erfindungsgemäßen Bohrkopfs versehenen Bohrwerkzeugs erreicht, weil durch die geradlinige, radiale Hauptschneide durch die Mittelachse hindurch ein einfaches, positionsstabiles Anbohren gewährleistet ist. Zudem stellte sich heraus, daß neben der gesteigerten Abrasionseffektivität die Standzeit des Bohrkopfs aufgrund des stetigen Verlaufs der Hauptschneide verlängert ist.

Bei einer Weiterbildung der Erfindung unterteilt die Hauptschneide die Stirnseite in zwei insbesondere identische Stirnseitenflügel, die von der Hauptschneide hin zu der jeweiligen V-förmigen Seitenfläche des Bohrkopfs abfällt. Der Stirnseitenflügel kann axial konkav gewölbt sein, und insbesondere der andere Stirnflügel kann dagegen plan sein, wobei vorzugsweise beide Stirnflügel axial konkav gewölbt sind. Bei einer bevorzugten Ausgestaltung der Erfindung kann an einem Stirnseitenflügel wenigstens ein axialer, von der Stirnseite vorstehender Vorsprung, vorzugsweise zwei axiale Vorsprünge, mit jeweils einer Nebenschneide ausgebildet sein, die sich von einem Flächenschenkel der V-förmigen Seitenfläche zumindest teilweise zur Hauptschneide erstreckt.

Insbesondere kann die Hauptschneide für einen peripherieseitigen Abschnitt einen ersten insbesondere konstanten Neigungswinkel und für einen mittelachsenseitigen Abschnitt einen zweiten insbesondere konstanten Neigungswinkel aufweisen, der bezüglich einer Radialebene, zu der die Mittelachse eine Ebenennormale ist, spitzwinklig liegt und größer als der erste Neigungswinkel ist.

Bei einer Weiterbildung der Erfindung kann eine an der Stirnseite ausgebildete Nebenschneide die Hauptschneide in der Mittelachse kreuzen und sich zu den V-förmigen Seitenflächen erstrecken. Vorzugsweise münden die Nebenschneide und die Hauptschneide in eine gemeinsame insbesondere punktförmige Spitze, durch welche die Mittelachse verläuft. Die Stirnseite kann vorzugsweise zumindest teilweise pyramidenförmig sein. Außerdem kann sowohl die Nebenschneide als auch die Hauptschneide zu einer Radialebene geneigt sind, zu der die Mittelachse eine Ebenennormale ist. Vorzugsweise ist die Nebenschneide radial, insbesondere derart gekrümmt, daß die Nebenschneide bei Draufsicht eine S-Form aufweist. Insbesondere kann die Nebenschneide axial konkav gewölbt sein.

In einem mit den oben genannten Erfindungsgegenständen kombinierbaren Erfindungsaspekt ist in der Stirnseite zumindest eine Rinne, vorzugsweise zwei zueinander bezüglich der Mittelachse punktsymmetrische Rinnen, zur Abfuhr von Bohrmehl ausgebildet. Erfindungsgemäß erstreckt sich die Rinne von einer Peripherie-Seite und mündet in einen Flächenschenkel der V-förmigen Seitenfläche, vorzugsweise sich verjüngend. Mit dieser erfindungsgemäßen Maßnahme wird bei Aufrechterhaltung eines sehr standfesten Bohrkopfs eine außerordentlich effektive Bohrmehlentsorgung über die Stirnseite hin zu dem durch die V-förmigen Seitenflächen begrenzten Freiraum und von der Peripherie-Seite weg ermöglicht, von dem das Bohrmehl über die Wendelnut längs des Bohrwerkzeugs abtransportiert werden kann.

Bei einer Weiterbildung der Erfindung kann die Rinne durch eine Vertiefung mit einem axial konkaven, insbesondere teilzylindrischen Boden gebildet sein. Vorzugsweise weist die Rinne einen ersten insbesondere teilkegelstumpfförmigen Abschnitt auf, der sich verjüngend von der Peripherie-Seite hin zur Mittelachse erstreckt, wobei vorzugsweise ein zweiter insbesondere teilkegelstumpfförmiger Abschnitt an den ersten Rinnenabschnitt anschließt und insbesondere sich weitend oder verjüngend in den Flächenschenkel mündet. Vorzugsweise liegen die Rinnenabschnitte in einem stumpfen Winkel zueinander. Der erste Rinnenabschnitt liegt mittig in der Stirnfläche und erstreckt sich von der Peripherie-Seite bis wenigstens den halben Weg zur Mittelachse radial.

Bei einer bevorzugten Ausführung der Erfindung unterteilt eine Hauptschneide die Stirnseite in zwei Stirnseitenflügel, wobei die Rinne in dem insbesondere in Drehrichtung nachlaufenden Stirnseitenflügel eingearbeitet ist. Vorzugsweise fällt die Hauptschneide mit einem Begrenzungsrand der Rinne zumindest annähernd zusammen.

Bei einer Weiterbildung der Erfindung mündet ein an der Stirnseite ausgebildeter Verbindungskanal von dem in Drehrichtung vorlaufenden Flächenschenkel der V-förmigen Seitenfläche in die Rinne. Vorzugsweise weist der Verbindungskanal eine geringere axiale Tiefe als die Rinne auf und/oder ist im peripherieseitennahen Bereich der Stirnseite eingebracht. Die Rinne kann zumindest im Bereich der Peripherie-Seite wenigstens 50%, vorzugsweise über 60%, der radialen Breite der Stirnseite einnehmen.

In einem noch weiteren mit den oben genannten Erfindungsgegenständen kombinierbarem Erfindungsaspekt ist ein Bohrkopf vorgesehen, bei dem die Peripherie-Seite eine axial verlaufende Vertiefung zur Abfuhr von Bohrmehl hin zu einer Förderwendel eines Schafts des Bohrwerkzeugs aufweist, die von zwei axial verlaufenden Stegen in Umfangsrichtung begrenzt ist. Erfindungsgemäß hat zumindest einer der Stege, vorzugsweise beide Stege, eine in Axialrichtung von der Stirnseite zunehmende Umfangsrichtungskomponente. Die mit Umfangsrichtungskomponente versehene, beispielsweise wendelförmige Erstreckung der Abfuhrvertiefung in der Peripherie-Seite gewährleistet einen aktiven Abtransport von Bohrmehl weg von der Stirnseite und deren Schneiden. Aufgrund der besonderen Form der Vertiefung unterstützt die Drehung des Bohrkopfs die Bohrmehlabfuhr.

Bei einer bevorzugten Ausführung der Erfindung ist/sind zumindest einer der Stege, vorzugsweise beide Stege, gekrümmt, wobei insbesondere die Krümmung hin zu einer Förderwendel eines an der Montageseite angebrachten Bohrwerkzeugschafts kontinuierlich ist. Dabei können beide Stege derart gekrümmt sein, dass deren Abstand in Erstreckungsrichtung der Vertiefung im wesentlichen gleich bleibt.

Bei einer Weiterbildung der Erfindung nimmt die Breite der Vertiefung hin zur Montageseite zu. Vorzugsweise erstreckt sich die Vertiefung wendelartige von der Stirnseite hin zur Montageseite.

Bei einer bevorzugten Ausführung der Erfindung bildet der Bohrkopf einen im wesentlichen prismatischen Körper mit einer bei einer Draufsicht im wesentlichen X-förmigen Grundform, die durch die sich gegenüberliegenden V-förmigen Seitenflächen bestimmt ist. Vorzugsweise ist ein stumpfer Winkel zwischen den beiden Flächenschenkel der V-förmigen Seitenfläche, insbesondere beider V-förmiger Seitenflächen, größer als 140°, vorzugsweise größer als 145°, insbesondere größer als 150°, und liegt beispielsweise bei ca. 152°.

Vorzugsweise hat der Körper eine radiale Einschnürung im wesentlichen auf Höhe der Mittelachse, wobei insbesondere die radiale Breite der Einschnürung mindestens 30%, vorzugsweise mindestens über 40%, insbesondere über 50%, der radialen Maximalbreite des Körpers im Bereich der Peripherie-Seite entspricht.

Insbesondere kann der Körper aus einem Hartmetallstück geformt, insbesondere gesintert, sein.

Des weiteren betrifft die Erfindung ein Bohrwerkzeug insbesondere für Gestein und/oder Beton mit einem erfindungsgemäßen Bohrkopf, dessen dem Bohrwerkzeug zugewandte Montageseite an einem Stirnende eines Schafts des Bohrwerkzeugs anzubringen ist, insbesondere in eine Nut im Stirnende eingesetzt und befestigt, insbesondere gelötet, ist.

Weitere Eigenschaften, Vorteil und Merkmale der Erfindung werden durch die folgende Beschreibung bevorzugter Ausführungen anhand der Zeichnungen deutlich, in denen zeigen:
Figur 1a eine perspektivische Ansicht einer Ausführung eines erfindungsgemäßen Bohrkopfs;
Figur 1b eine Seitenansicht auf eine Peripherie-Seite des Bohrkopfs gemäß Figur 1a;
Figur 1c eine Seitenansicht auf die V-förmige Seitenfläche des Bohrkopfs gemäß Figur 1a;
Figur 1d eine Draufsicht auf die Stirnansicht des Bohrkopfs gemäß Figur 1a;
Figur 2a eine perspektivische Ansicht einer Ausführung eines erfindungsgemäßen Bohrkopfs;
Figur 2b eine Seitenansicht auf die Peripherie-Seite des Bohrkopfs gemäß Figur 2a;
Figur 2c eine Seitenansicht auf die V-förmige Seitenfläche des Bohrkopfs gemäß Figur 2a;
Figur 2d eine Draufsicht auf die Stirnseite des Bohrkopfs gemäß Figur 2a;
Figur 3a eine perspektivische Ansicht einer Ausführung eines erfindungsgemäßen Bohrkopfs;
Figur 3b eine Seitenansicht auf die Peripherie-Seite des Bohrkopfs gemäß Figur 3a;
Figur 3c eine Seitenansicht auf die V-förmige Seite des Bohrkopfs gemäß Figur 3a;
Figur 3d eine Draufsicht auf die Stirnseite des Bohrkopfs gemäß Figur 3a;
Figur 4a eine perspektivische Ansicht einer Ausführung eines erfinderischen Bohrkopfs;
Figur 4b eine Seitenansicht auf die Peripherie-Seite des Bohrkopfs gemäß Figur 4a;
Figur 4c eine Seitenansicht auf die V-förmige Seitenfläche des Bohrkopfs gemäß Figur 4a;
Figur 4d eine Draufsicht auf die Stirnseite des Bohrkopfs gemäß Figur 4d;
Figur 5a eine perspektivische Ansicht einer Ausführung des erfindungsgemäßen Bohrkopfs;
Figur 5b eine Seitenansicht auf die Peripherie-Seite des Bohrkopfs gemäß Figur 5a;
Figur 5c eine Seitenansicht auf die V-förmige Seitenfläche des Bohrkopfs gemäß Figur 5a;
Figur 5d eine Draufsicht auf die Stirnseite des Bohrkopfs gemäß Figur 5a;
Figur 6a eine perspektivische Ansicht einer Ausführung eines erfindungsgemäßen Bohrkopfs;
Figur 6b eine Seitenansicht auf die Peripherie-Seite des Bohrkopfs gemäß Figur 6a;
Figur 6c eine Seitenansicht auf die V-förmige Seitenfläche des Bohrkopfs gemäß Figur 6a;
Figur 6d eine Draufsicht auf die Stirnseite des Bohrkopfs gemäß Figur 6a;
Figur 7a eine perspektivische Ansicht einer Ausführung eines erfindungsgemäßen Bohrkopfs;
Figur 7b eine Seitenansicht auf die Peripherie-Seite des Bohrkopfs gemäß Figur 7a;
Figur 7c eine Seitenansicht auf die V-förmige Seitenfläche des Bohrkopfs gemäß Figur 7a; und
Figur 7d eine Draufsicht auf die Stirnseite des Bohrkopfs gemäß Figur 7a.

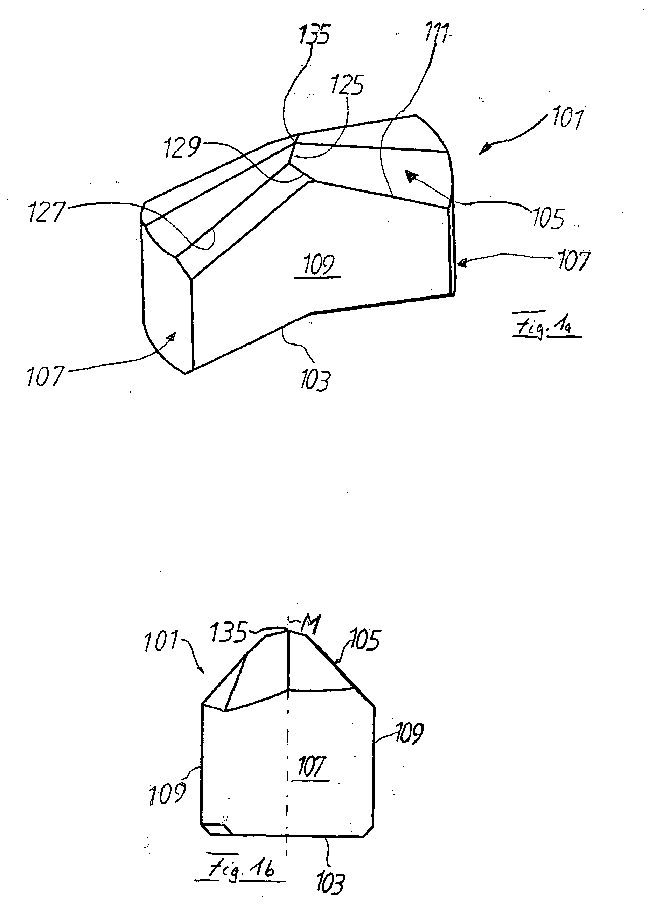

In den Figuren 1a bis 1d ist eine Ausführung des erfindungsgemäßen Bohrkopfs im Allgemeinen mit Bezugsziffer 101 versehen. Der Bohrkopf 101 ist aus einem Hartmetallstück zu einem einteiligen Körper gefertigt, der im Wesentlichen durch vier Hauptseiten definiert ist, nämlich eine Montageseite 103, die einem Stirnende eines nicht dargestellten Bohrwerkzeugs bei der Montage des Bohrkopfs 101 zuzuwenden ist; eine der Montageseite gegenüberliegende Stirnseite 105, die mit Schneidkanten versehen ist; zwei sich diametral gegenüberliegende Peripherie-Seiten 107, die sowohl in die Stirnseite 105 als auch in die Montageseite 103 mündet, und zwei sich diametral gegenüberliegende, V-förmige Seitenflächen 109.

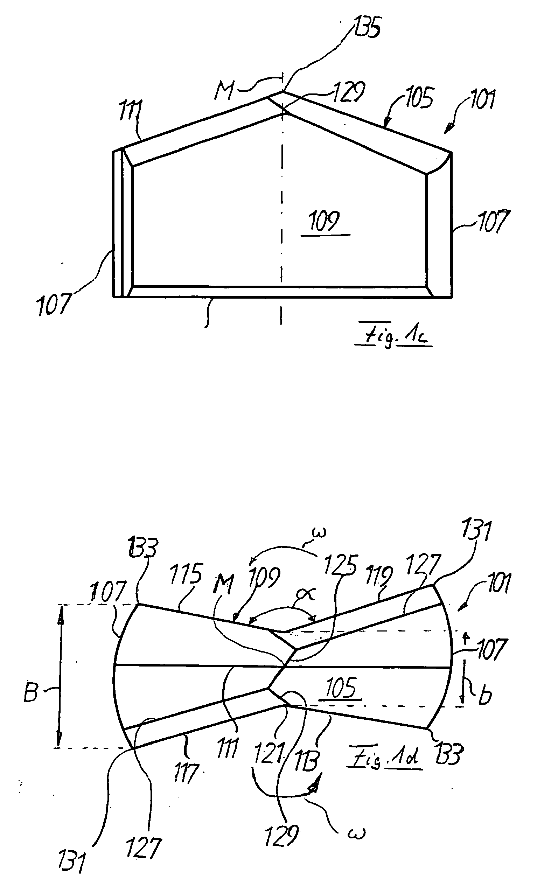

Wie insbesondere in Figur 1d ersichtlich ist, ist der Bohrkopf 101 an der Stirnseite 105 mit einer bezüglich einer Radialrichtung knickfreien, geradlinigen, durch eine Mittelachse M des Bohrkopfs radial verlaufenden Hauptschneide 111 versehen, die sich von der Peripherie-Seite 107 geradlinig, stetig quer über eine gesamte Stirnseitenhälfte zur Mittelachse M erstreckt und dort in Axialrichtung unter Ausbilden einer punktförmigen Spitze abknickt und mit der selben Steigung geradlinig und knickfrei zur gegenüberliegenden Peripherie-Seite 107 verläuft. Die Hauptschneide 111 unterteilt die Stirnseite 105 in zwei punktsymmetrische Stirnseitenflügel.

Wie insbesondere Figuren 1a und 1d zeigen, hat der Bohrkopf 101 einen im Wesentlichen prismatischen Grundkörper mit zwei Paaren parallele Flächenschenkel 113, 115 und 117, 119 der V-förmigen Seitenflächen. Die zwei die V-förmige Seitenfläche 109 bildenden Flächenschenkel 113, 117 bzw. 115, 119 spannen einen stumpfen Winkel α von etwas 152° auf. Der Körper des Bohrkopfs 101 umfaßt auf Höhe der Mittelachse M eine Einschnürung 121, dessen radiale Breite b mindestens 50% der maximalen, radialen Breite B an der Peripherie-Seite 107 entspricht.

Eine erste Nebenschneide 125 kreuzt die Hauptschneide 111 in der Mittelachse M und bildet mit der Hauptschneide 111 einen stumpfen bzw. spitzen Winkel und erstreckt sich im Wesentlichen über die Hälfte der Breite b des Bohrkopfs 101 im Bereich der Einschnürung 121. An der ersten Nebenschneide 125 zweigen eine zweite und dritte Nebenschneide 127 und 129 ab, wobei die zweite, lange Nebenschneide 127 parallel zum Flächenschenkel 117 bzw. 119 liegt und der dritte Nebenschenkel in die Einschnürung 121 mündet. Die Hauptschneide 111 und die Nebenschneide 125 bilden an der Stirnseite 105 eine Pyramidenform.

Die Peripherie-Seiten 107 sind kontinuierlich stetig gekrümmt, insbesondere annähernd kreisförmig, wobei der Krümmungsgrad der Peripherie-Seite 107 an der in Drehrichtung ω vorlaufenden Axialrand 131 weniger stark ausgeprägt ist als der Krümmungsgrad der Peripherie-Seite 107 an dem in Drehrichtung ω nachlaufenden Axialrand 133.

Also ist ein Mittelachsabstand des vorlaufenden Axialrands 131 geringfügig größer als der Mittelachsabstand des nachlaufenden Axialrands 133. Der Mittelachsabstand nimmt kontinuierlich stetig von dem vorlaufenden Axialrand 131 im umfänglichen Verlauf der Peripherie-Seite 107 hin zum nachlaufenden Axialrand 133 ab. Im Verlauf der Peripherie-Seite 107 ist bevorzugt, eine Mittelachsabstandreduzierung um mindestens 1%, vorzugsweise 8%, zu realisieren. Mit dem stetig kontinuierlichen mittelnutabfuhrfreien Verlauf der Peripherie-Seite 107 ist eine positionsgenaue Führung des Bohrwerkzeugs bzw. des Bohrkopfs innerhalb des Bohrlochs möglich, wodurch Fehlstellungen und Vibrationen beim Bohren reduziert werden können.

Eine besonders hohe Standfestigkeit für den Bohrkopf 101 wird erfindungsgemäß deswegen erreicht, weil die Hauptschneide 111 sich knickfrei in radialer Richtung von der Peripherie-Seite 107 hin zur Mittelachse M erstreckt und dort punktförmig eine Spitze 135 bildet.

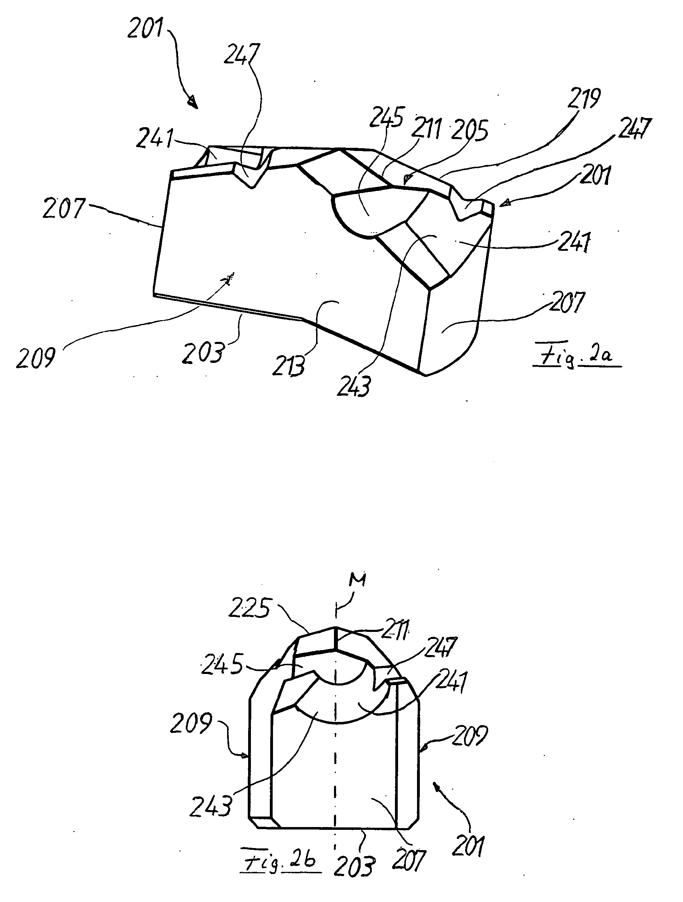

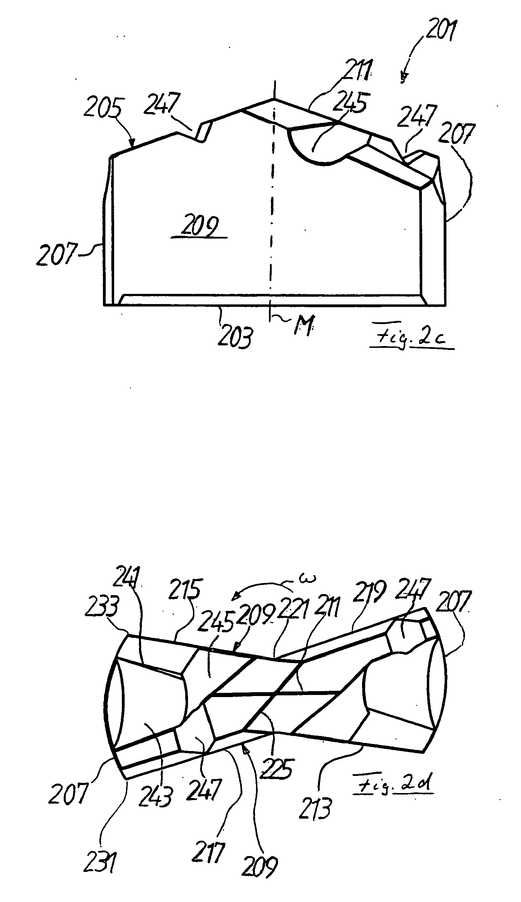

In den Figuren 2a bis 2d ist eine erfindungsgemäße Ausführung eines Bohrkopfs dargestellt, wobei zur besseren Lesbarkeit der Figurenbeschreibung und zur Vermeidung von Wiederholungen, für identische und ähnliche Bestandteile des Bohrkopfs der Ausführung die gleichen Bezugsziffern wie bei der Ausführung gemäß den Figuren 1a bis 1d verwendet wurden, die um 100 erhöht sind.

Der Bohrkopfs 201 unterscheidet sich von dem Bohrkopf 101 gemäß Figur 1 darin, daß in der Stirnseite 205 eine Rinne 241 mit einem axial konkaven Boden eingearbeitet ist, die sich in einem ersten Rinnenabschnitt 243 von der Peripherie-Seite 207 in Radialrichtung hin zur Mittelachse M verjüngend erstreckt. An den ersten Abschnitt 243 der Rinne 241 schließt ein zweiter, sich leicht weitender Abschnitt 244 an, der in einen Flächenschenkel 213 bzw. 215 mündet. Zwischen dem ersten Rinnenabschnitt 243 und dem zweiten Rinnenabschnitt 245 besteht ein stumpfer Winkel von etwa 130 bis 145 Grad.

Von der dem Flächenschenkel 213 gegenüberliegenden Flächenschenkel 219 ist in der Stirnseite 205 des Bohrkopfs 201 ein Verbindungskanal 247 eingearbeitet, der eine geringere radiale Tiefe als die Rinne 241 aufweist. Der Verbindungskanal 247 weist einen im wesentlichen trichterförmigen Querschnitt auf und erleichtert den Abfluß von Bohrmehl über die Rinne hin zum vorlaufenden Flächenschenkel 217, 219.

Mit der erfindungsgemäßen Ausführung gemäß den Figuren 2a bis 2d ist ein besonders effektiver Bohrmehlabtransport aus dem Schneidbereich des Bohrkopfs 201 realisiert, wobei ein zentraler Schneidenbereich in der Mitte um die Mittelachse M herum gebildet ist.

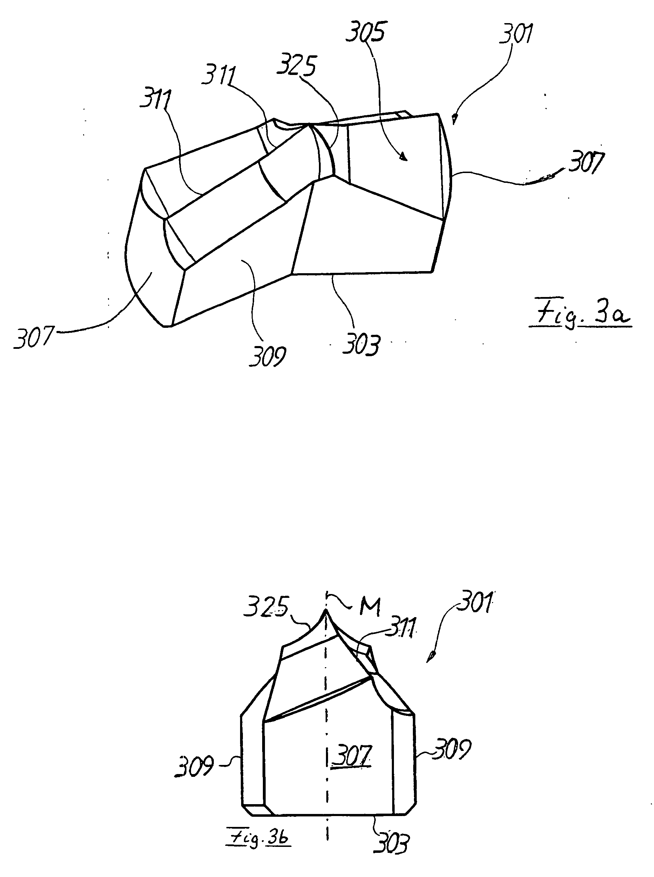

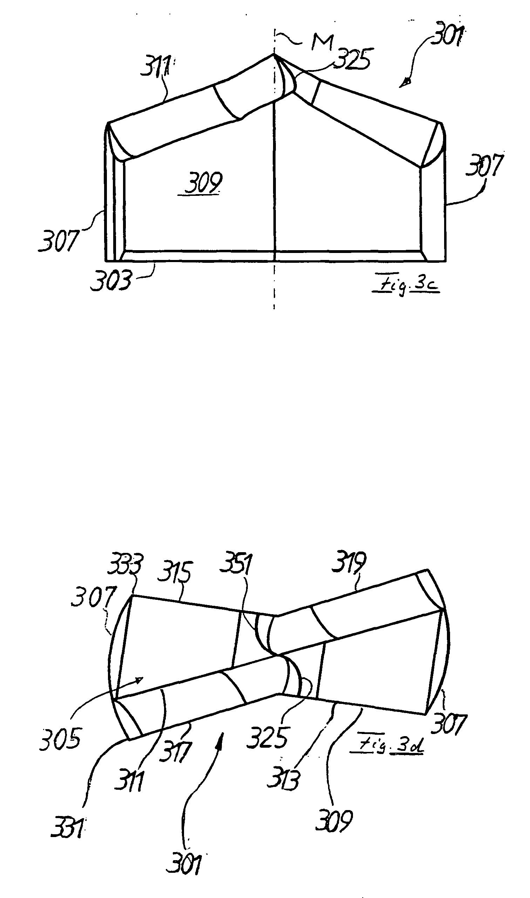

In den Figuren 3a bis 3d ist eine bevorzugte Ausführung eines Bohrkopfs dargestellt, wobei zur besseren Lesbarkeit die Figurenbeschreibung für gleiche oder ähnliche Bestandteile die gleichen Bezugsziffern wie bei den zuvor beschriebenen Bohrköpfen 101, 201 verwendet werden, welche gleiche Bezugsziffern um 100 bzw. 200 erhöht sind.

Der Bohrkopf 301 gemäß den Figuren 3a bis 3d unterscheidet sich im wesentlichen von dem Bohrkopf 101 gemäß den Fig. 1a bis d darin, dass die durch die Hauptschneide 311 gebildeten Stirnseitenflügel der Stirnseite 305 axial konkav gewölbt sind. Des weiteren unterscheidet sich der Bohrkopf 301 gegenüber den vorgenannten Bohrköpfen 101, 201 dadurch, dass im Bereich der Mittelachse M die konstante Steigung der Hauptschneide 311 gegenüber der konstanten Steigung der Hauptschneide 311 im peripheren Bereich größer ist. Auf diese Weise entsteht ein aus der Stirnseite 305 herausragender, pyramidenförmiger, in eine Punktspitze zulaufender Spitzenbereich, der sowohl durch die Hauptschneide 311 als auch durch eine Nebenschneide 325 gebildet ist, die sich von der Mittelachse M radial hin zu den Flächenschenkeln 315 bzw. 313 erstreckt. Die Nebenschneide 325 hat in Draufsicht im wesentlichen eine S-Form.

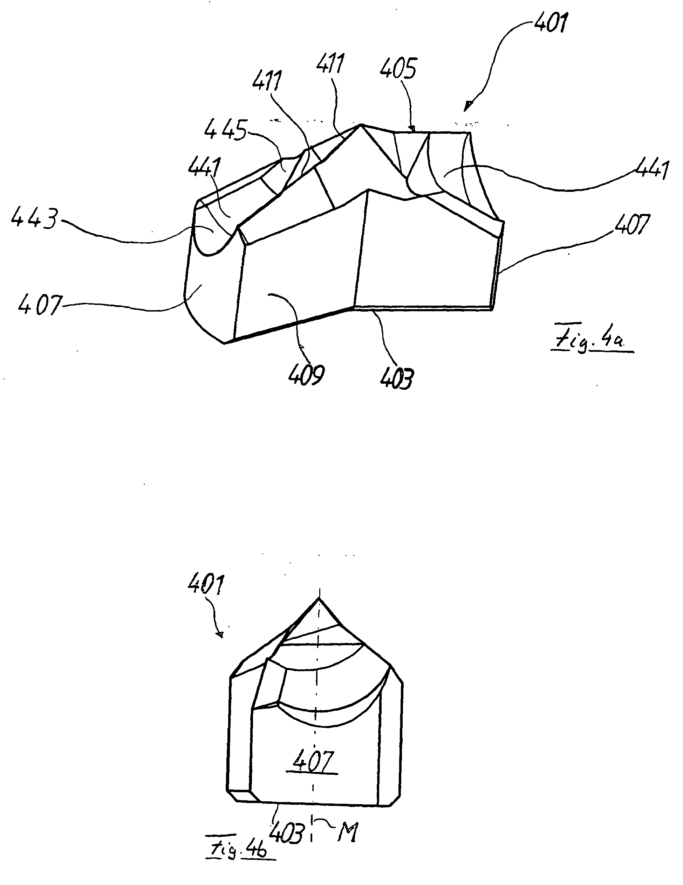

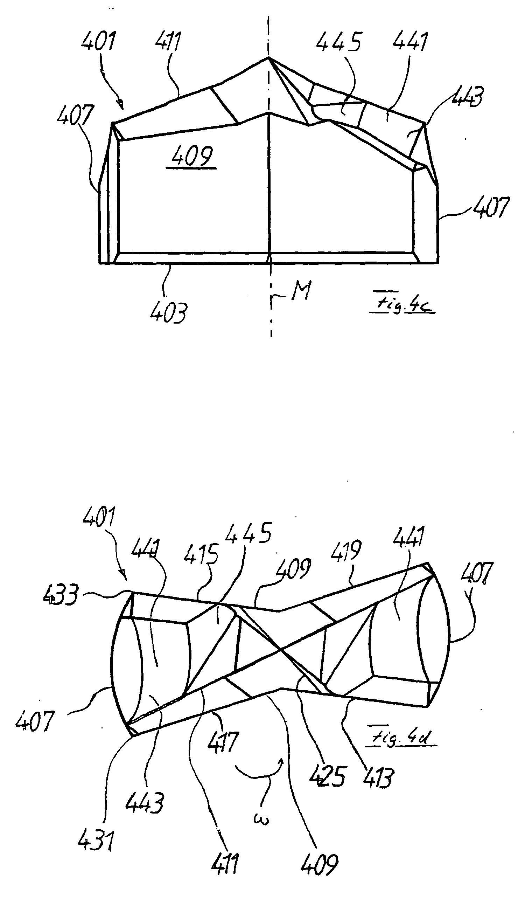

Die Figuren 4a bis 4d zeigen eine bevorzugte Ausführung des erfindungsgemäßen Bohrkopfs, wobei zur besseren Lesbarkeit für gleiche oder ähnliche Bauteile die identischen Bezugsziffern zu den oben genannten Bohrköpfen 101, 201, 301 verwendet werden, die um 100, 200 bzw. 300 erhöht sind.

Der Bohrkopf 401 unterscheidet sich von dem Bohrkopf 201 gemäß den Figuren 2a bis 2d darin, dass die Hautschneide 411 und ein Begrenzungsrand der Rinne 441 zusammenfallen, so dass sich die Schneide 411 von der Peripherie-Seite 407 zur diametral gegenüberliegenden Peripherie-Seite 407 erstrecken kann. Somit liegt die mittig angeordnete Rinne 441 in einem der von der Hauptschneide 411 unterteilten Stirnseitenflügel der Stirnseite 405.

Als weiterer Unterschied zu der Ausführung gemäß den Figuren 2a bis 2d sei erwähnt, dass sich die Rinne 441 kontinuierlich von der Peripherie-Seite 407 hin zum Flächenschenkel 413 bzw. 415 verjüngt. Ein Verbindungskanal kann bei der Ausführung gemäß den Fig. 4a bis d entbehrt sein.

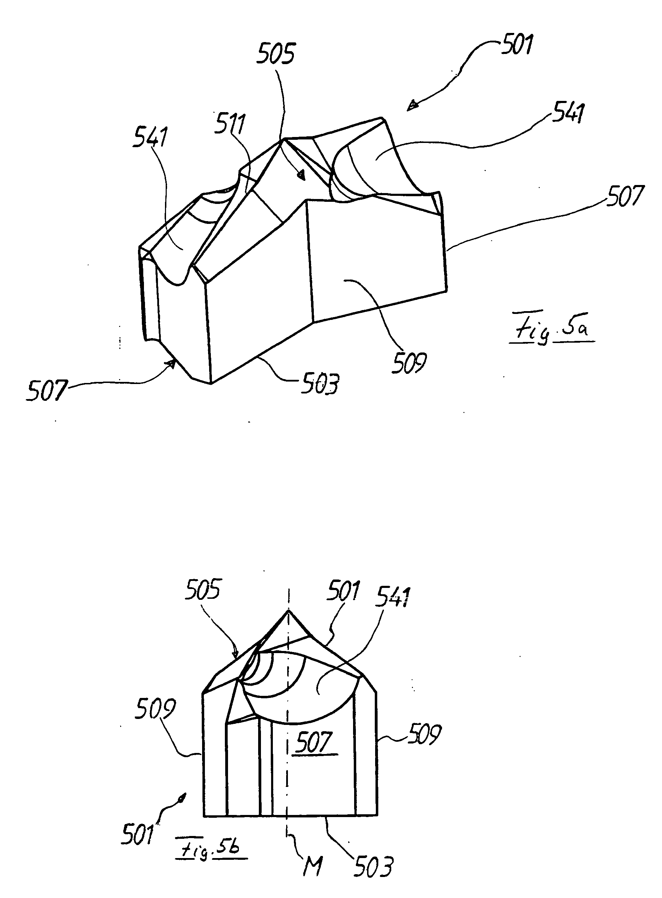

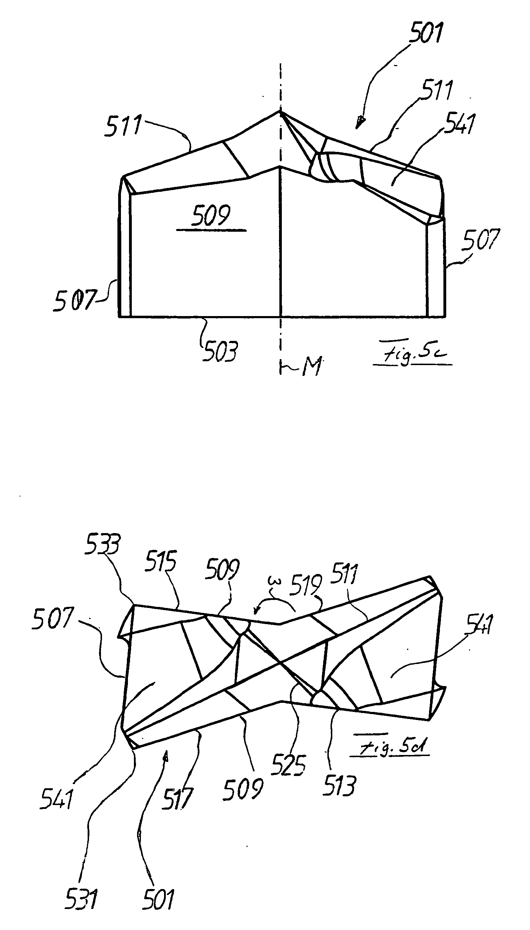

In den Figuren 5a bis 5d ist eine Ausführung eines erfindungsgemäßen Bohrkopfs dargestellt, wobei zur besseren Lesbarkeit der Figurenbeschreibung für ähnliche und identische Bestandteile des Bohrkopfs gleiche Bezugsziffern wie bei den oben genannten Bohrkopf-Ausführungen verwendet werden, die um 100, 200, 300 bzw. 400 erhöht sind.

Der Bohrkopf 501 unterscheidet sich von dem Bohrkopf gemäß den Figuren 4a bis 4d darin, dass der Begrenzungsrand der Rinne 541 nicht mit der Hauptschneide 511 zusammenfällt, sondern dazu versetzt angeordnet ist. Die Rinne 541 erstreckt sich nunmehr von der Peripherie-Seite 507 stets verjüngend hin zu einem Flächenschenkel 515 bzw. 513, ohne einen stumpfwinkelförmigen Knick im Verlauf der Rinne 541 zu haben. Vielmehr zeigt diese Ausführung eine winkelfreie Rinnenverbindung zwischen der Peripherie-Seite 507 und den in Drehrichtung ω nachlaufenden Flächenschenkel 515 bzw. 513 der V-förmigen Seitenfläche 509.

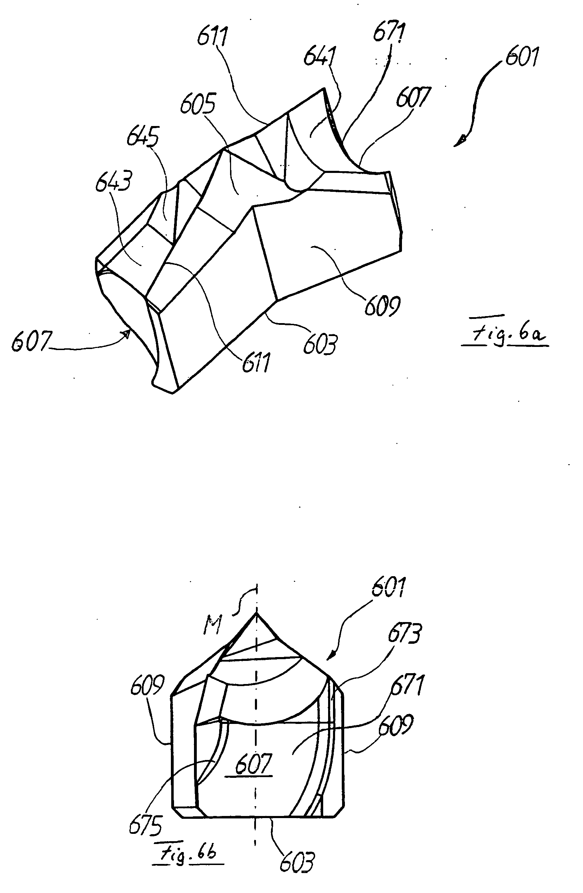

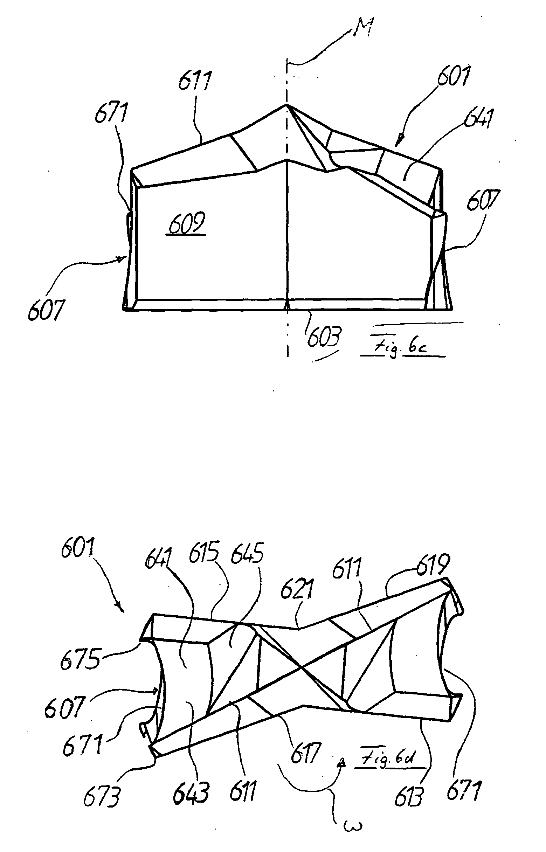

Die Figuren 6a bis 6d zeigen eine Ausführung eines erfindungsgemäßen Bohrkopfs, wobei zur besseren Lesbarkeit der Figurenbeschreibung für gleiche oder ähnliche Bestandteile des Bohrkopfs die gleichen Bezugsziffern wie bei den oben genannten Ausführungen verwendet werden, die um 100, 200, 300, 400, 500 bzw. 600 erhöht sind.

Die Ausführung gemäß den Figuren 6a bis 6d unterscheidet sich von der Ausführung gemäß den Figuren 4a bis 4d darin, dass die Peripherie-Seite 607 keine stets kontinuierlich gekrümmte Umfangfläche aufweist, sondern eine hauptsächlich axial verlaufende, wendelförmige Vertiefung 671 als Abfuhrnut mit einer nicht vernachlässigbaren Umfangsrichtungskomponente. Die Vertiefung 671 ist von radial vorstehenden Stegen 673, 675 in Umfangrichtung begrenzt ist. Die Vertiefung 671 verläuft wendelartig hin zu einer Förderwendel des nicht dargestellten Bohrwerkzeugschafts. Insofern sind die Stege 673, 675 gekrümmt, wobei die Krümmung von der Stirnseite 605 hin zur Montageseite 603 kontinuierlich ist, wobei die Umfangsbreite der Vertiefung in deren Verlauf gleich bleibt. Die Stege 673, 675 verlaufen im wesentlichen parallel zueinander. Der Boden der Vertiefung 671 ist radial konkav ausgebildet.

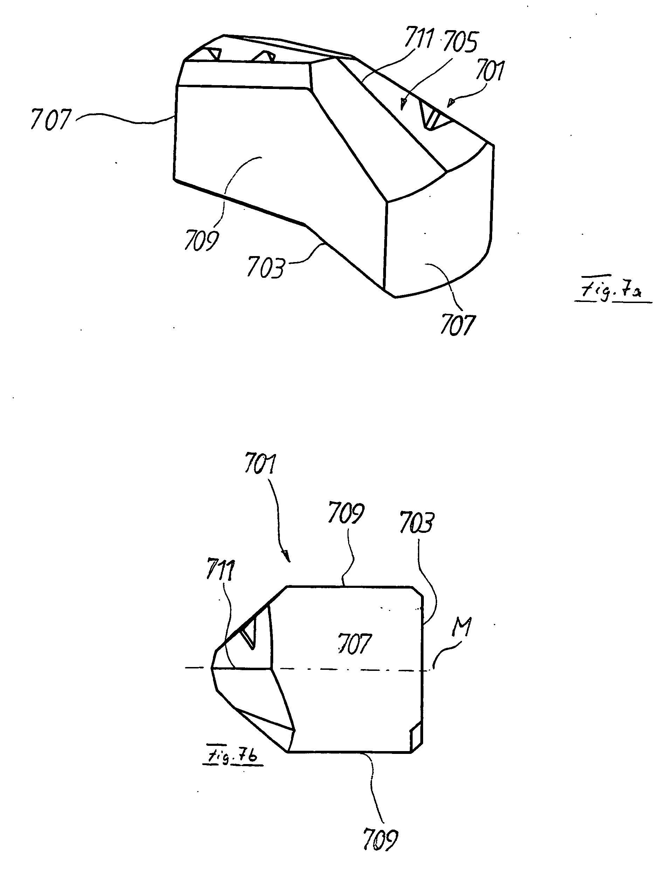

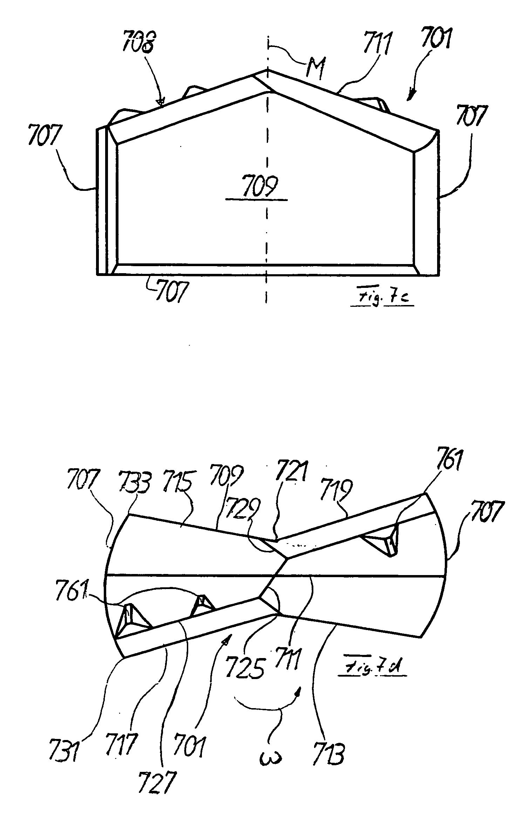

In den Figuren 7a bis 7d ist eine Ausführung des erfindungsgemäßen Bohrkopfs dargestellt, wobei zur besseren Lesbarkeit der Figurenbeschreibung für ähnliche und identische Bestandteile des Bohrkopfs die gleichen Bezugsziffern wie bei den oben genannten Ausführungen eingesetzt werden, die um 100, 200, 300, 400, 500 bzw. 600 erhöht sind.

Die Ausführung gemäß den Figuren 7a bis 7d unterscheidet sich von der Ausführung gemäß den Figuren 1a bis 1d darin, dass auf eine Seitenhälfte der Stirnseite ein Vorsprung und auf der anderen Seitenhälfte zwei Vorsprünge vorgesehen sind, deren Nebenschneiden 761 sich von der Nebenschneide 727 hin zur Hauptschneide 711 erstreckt, ohne diese zu erreichen.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 101,201,301,401,501,601,701: Bohrkopf
- 103, 203, 303, 403, 503, 603, 703: Montageseite
- 105, 205, 305, 405, 505, 605, 705: Stirnseite
- 107, 207, 307, 407, 507, 607, 707: Peripherie-Seite
- 109,209, 309, 409, 509, 609, 709: V-förmige Seitenfläche
- 111, 211, 311, 411, 511, 611, 711: Hauptschneide
- 113, 115, 117, 119,: Flächenschenkel
- 213, 215, 217, 219,: "
- 313,315,317,319,: "
- 413,415,417,419,: "
- 513,515,517,519: "
- 121, 221, 321, 421, 521, 621, 721: Einschnürung
- 125, 127, 129,: Nebenschneide
- 225,227,229,: "
- 325,327,329,: "
- 425,427,429,: "
- 525, 527, 529,: "
- 625,627,629,: "
- 725, 727, 761: "
- 131,231,331,431,531,631,731: vorlaufender Axialrand
- 133, 233, 333, 433, 533, 633, 733: nachlaufender Axialrand
- 135, 235, 335, 435, 535, 635, 735: punktförmige Spitze
- 241,441,541,641: Rinne
- 243, 245, 443, 445, 543, 545, 643, 645: Rinnenabschnitt
- 247: Verbindungskanal
- 671: Vertiefung
- 673,675: Steg
- ω: Drehrichtung
- b: radiale Breite
- B: maximale radiale Breite
- M: Mittelachse

## Patentansprüche

1. Bohrkopf für ein Bohrwerkzeug, insbesondere einen Gesteins- und/oder Betonbohrer, mit einer Mittelachse (M), die im montierten Zustand des Bohrkopfs (101, 201, 301, 401, 601, 701) mit der Bohrwerkzeugachse zusammenfällt, einer dem Bohrwerkzeug zuzuwendenden Montageseite (103, 203, 303, 403, 603, 703), an welcher der Bohrkopf an einem Stirnende des Bohrwerkzeugs anzubringen ist, einer der Montageseite (103, 203, 303, 403, 603, 703) diametral gegenüberliegenden Stirnseite (105, 205, 305, 405, 605, 705), an der zumindest eine Schneide angeordnet ist, zwei diametral gegenüberliegenden, eine im wesentlichen in Axialrichtung erstreckende Abfuhrnut begrenzenden, V-förmigen Seitenflächen (109, 209, 309, 409, 609, 709) und zwei diametral gegenüberliegenden, in Axialrichtung erstreckenden Peripherie-Seiten (107, 207, 307, 407, 607, 707), die zwischen den beiden V-förmigen Seitenflächen (109, 209, 309, 409, 609, 709) liegen, **dadurch gekennzeichnet, dass** zumindest einer der Peripherie-Seiten (107, 207, 307, 407, 607, 707), vorzugsweise beide Peripherie-Seiten (107, 207, 307, 407, 607, 707), eine radial konvexe Krümmung mit einem Radius bezüglich der Mittelachse (M) aufweist, der in einer umfänglichen Richtung längs der gesamten Peripherie-Seite (107, 207, 307, 407, 607, 707) kontinuierlich stetig abnimmt.

2. Bohrkopf nach Anspruch 1, **dadurch gekennzeichnet, dass** zumindest einer der Peripherie-Seiten (107, 207, 307, 407, 607, 707), vorzugsweise beide Peripherie-Seiten (107, 207, 307, 407, 607, 707), frei einer radial konkaven Abfuhrnut ist/sind.

3. Bohrkopf nach Anspruch 1 oder 2, **dadurch gekennzeichnet, dass** zumindest einer der Peripherie-Seiten (107, 207, 307, 407, 607, 707), vorzugsweise beide Peripherie-Seiten, eine in Drehrichtung vorlaufende Axialkante und eine in Drehrichtung (ω) nachlaufende Axialkante aufweist, wobei der Radius der nachlaufenden Axialkante gegenüber dem Radius der vorlaufende Axialkante radial zurückgesetzt ist und der Radius längs der radial konvexen Peripherie-Seite (107, 207, 307, 407, 607, 707) zwischen dem Axialvorlaufrand und dem Axialnachlaufrand geringfügig kontinuierlich stetig abnimmt.

4. Bohrkopf nach einem der Ansprüche 1 bis 3, **dadurch gekennzeichnet, dass** sich an der Stirnseite (105, 205, 305, 405, 505, 605, 705) eine Hauptschneide von der Mittelachse (M) geradlinig und radial hin zu beiden Peripherie-Seiten (107, 207, 307, 407, 507, 607, 707) erstreckt.

5. Bohrkopf nach Anspruch 4, **dadurch gekennzeichnet, dass** die Hauptschneide (111, 211, 311, 411, 511, 611, 711) als Diagonale die Stirnseite in zwei insbesondere identische Stirnseitenflügel unterteilt, die von der Hauptschneide (111, 211, 311, 411, 511, 611, 711) hin zu der jeweiligen V-förmigen Seitenfläche (109, 209, 309, 409, 509, 609, 709) abfällt.

6. Bohrkopf nach Anspruch 4 oder 5, **dadurch gekennzeichnet, dass** ein Stirnseitenflügel axial konkav gewölbt ist und insbesondere der andere Stirnseitenflügel plan ist, vorzugsweise beide Stirnseitenflügel axial konkav gewölbt sind.

7. Bohrkopf nach einem der Ansprüche 4 bis 6, **dadurch gekennzeichnet, dass** an einem Stirnflügel wenigstens ein axialer Vorsprung, vorzugsweise zwei axiale Vorsprünge, mit jeweils einer Nebenschneide aufweist, die sich von der V-förmigen Seitenfläche (709) zumindest teilweise zur Hauptschneide (711) erstreckt.

8. Bohrkopf nach einem der Ansprüche 4 bis 7, **dadurch gekennzeichnet, dass** die Hauptschneide (111, 311, 411, 511, 611, 711) als Diagonale der Stirnseite (105, 205, 305, 405, 605, 705) in eine Peripherie-Seite (107, 207, 307, 407, 507, 607, 707), vorzugsweise beide Peripherie-Seiten, mündet.

9. Bohrkopf nach einem der Ansprüche 4 bis 8, **dadurch gekennzeichnet, dass** die Hauptschneide (311, 411, 511, 611) für einen peripherieseitigen Abschnitt einen ersten insbesondere konstanten Neigungswinkel und für einen mittelachsenseitigen Abschnitt einen zweiten insbesondere konstanten Neigungswinkel aufweist, der bezüglich einer Radialebene, zu der die Mittelachse (M) eine Ebenennormale ist, spitzwinklig liegt und größer als der erste Neigungswinkel ist.

10. Bohrkopf nach einem der Ansprüche 4 bis 9, **dadurch gekennzeichnet, dass** eine an der Stirnseite ausgebildete Nebenschneide (125, 225, 325, 425, 525, 625, 725) die Hauptschneide (111, 211, 311, 411, 511, 611, 711) in der Mittelachse (M) kreuzt und sich zu den V-förmigen Seitenflächen (109, 209, 309, 409, 509, 609, 709) erstreckt, wobei insbesondere die Nebenschneide (125, 225, 325, 425, 525, 625, 725) und die Hauptschneide in eine gemeinsame, insbesondere im wesentlichen punktförmige Spitze münden, durch welche die Mittelachse (M) verläuft, so daß insbesondere die Stirnseite (105, 205, 305, 405, 505, 605, 705) zumindest teilweise pyramidenförmig ist, wobei insbesondere sowohl die Nebenschneide (125, 225, 325, 425, 525, 625, 725) als auch die Hauptschneide (111, 211, 311, 411, 511, 611, 711) zu einer Radialebene geneigt sind, zu der die Mittelachse (M) eine Ebenennormale ist.

11. Bohrkopf nach Anspruch 10, **dadurch gekennzeichnet, dass** die Nebenschneide (325) radial, insbesondere radial derart gekrümmt ist, daß die Nebenschneide (325) bei Draufsicht eine S-Form aufweist.

12. Bohrkopf nach Anspruch 10 oder 11, **dadurch gekennzeichnet, dass** die Nebenschneide (325) axial konkav gewölbt ist.

13. Bohrkopf nach einem der Ansprüche 1 bis 12, **dadurch gekennzeichnet, dass** er einen im wesentlichen prismatischen Körper mit einer bei einer Draufsicht im wesentlichen X-förmigen Grundform bildet, die durch die sich gegenüberliegenden V-förmigen Seitenflächen (109, 209, 309, 409, 509, 609, 709) bestimmt ist.

14. Bohrkopf nach einem der Ansprüche 1 bis 13, **dadurch gekennzeichnet, dass** ein stumpfer Winkel zwischen den beiden Flächenschenkel der V-förmigen Seitenfläche (109, 209, 309, 409, 509, 609, 709), insbesondere beider V-förmiger Seitenflächen, größer als 140°, vorzugsweise größer als 145°, insbesondere größer als 150°, beispielsweise bei ca. 152° liegt.

15. Bohrkopf nach Anspruch 13 oder 14, **dadurch gekennzeichnet, dass** der Körper eine radiale Einschnürung (121, 221, 321, 421, 521, 621, 721) im wesentlichen auf Höhe der Mittelachse (M) aufweist, wobei insbesondere die radiale Breite der Einschnürung (121, 221, 321, 421, 521, 621, 721) mindestens 30 %, vorzugsweise mindestens über 40 %, insbesondere über 50 %, der radialen Maximalbreite des Körpers im Bereich der Peripherie-Seite (107, 207, 307, 407, 507, 607, 707) entspricht.

16. Bohrkopf nach einem der Ansprüche 13 bis 15, **dadurch gekennzeichnet, dass** der Körper aus einem Hartmetallstück geformt, insbesondere gesintert, ist

17. Bohrwerkzeug insbesondere für Gestein und/oder Beton mit einem nach einem der Ansprüche 1 bis 16 ausgebildeten Bohrkopf (101, 201, 301, 401, 501, 601, 701), dessen dem Bohrwerkzeug zugewandte Montageseite (103, 203, 303, 403, 503, 603, 703) an einem Stirnende eines Schafts des Bohrwerkzeugs anzubringen ist, insbesondere in eine Nut im Stirnende eingesetzt und befestigt, insbesondere gelötet, ist.

## Claims

1. A drilling head for a drilling tool, more preferably a rock and/or concrete drill with a centre axis (M), which in the assembled state of the drilling head (101, 201, 301, 401, 601, 701) coincides with the drilling tool axis, an assembly side (103, 203, 303, 403, 603, 703) to be phased to the drilling tool, on which the drilling head is to be fastened to a face end of the drilling tool, a face side (105, 205, 305, 405, 605, 705) diametrically located opposite the assembly side (103, 203, 303, 403, 603, 703), on which at least one cutting edge is arranged, two V-shaped lateral faces (109, 209, 309, 409, 609, 709) which limit a discharge slot that substantially extends in axial direction and two peripheral sides (107, 207, 307, 407, 607, 707) which are located diametrically opposite each other and extend in axial direction, which are located between the two V-shaped lateral faces (109, 209, 309, 409, 609, 709), **characterized in that** at least one of the peripheral sides (107, 207, 307, 407, 607, 707) preferentially both peripheral sides (107, 207, 307, 407, 607, 707) comprises a radially convex curvature with a radius with regard to the centre axis (M), which in a circumferential direction along the entire peripheral side (107, 207, 307, 407, 607, 707) continuously decreases steadily.

2. The drilling head according to Claim 1, **characterized in that** at least one of the peripheral sides (107, 207, 307, 407, 607, 707) preferentially both peripheral sides (107, 207, 307, 407, 607, 707), is/are free of a radially concave discharge slot.

3. The drilling head according to Claim 1 or 2, **characterized in that** at least one of the peripheral sides (107, 207, 307, 407, 607, 707), preferentially both peripheral sides, comprises a leading axial edge in direction of rotation and a trailing axial edge in direction of rotation (ω), wherein the radius of the trailing axial edge is radially set back relative to the radius of the leading axial edge and the radius along the radial convex peripheral side (107, 207, 307, 407, 607, 707) decreases continuously steadily by a small amount between the axial leading margin and the axial trailing margin.

4. The drilling head according to any one of the Claims 1 to 3, **characterized in that** on the face end (105, 205, 305, 405, 505, 605, 705) a main cutting edge extends from the centre axis (M) in a straight line and radially towards both peripheral sides (107, 207, 307, 407, 607, 707).

5. The drilling head according to Claim 4, **characterized in that** the main cutting edge (111, 211, 311, 411, 511, 611, 711) as diagonal divides the face end in two more preferably identical face end wings which decreases from the main cutting edge (111, 211, 311, 411, 511, 611, 711) to the respective V-shaped lateral face (109, 209, 309, 409, 509, 609, 709).

6. The drilling head according to Claim 4 or 5, **characterized in that** a face end wing is axially curved concavely and more preferably the other face end wing is flat, preferentially both face end wings are axially curved concavely.

7. The drilling head according to any one of the Claims 4 to 6, **characterized in that** on a face wing at least one axial projection preferentially comprises two axial projections with a minor cutting edge each, which extends from the V-shaped lateral face (709) at least partially towards the main cutting edge (711).

8. The drilling head according to any one of the Claims 4 to 7, **characterized in that** the main cutting edge (111, 211, 311, 411, 511, 611, 711) as diagonal of the face end (105, 205, 305, 405, 505, 605, 705) terminates in a peripheral side (107, 207, 307, 407, 507, 607, 707), preferentially both peripheral sides.

9. The drilling head according to any one of the Claims 4 to 8, **characterized in that** the main cutting edge (311, 411, 511, 611) for a peripheral-sided section comprises a first more preferably constant inclination angle and for a centre-axis sided section a second more preferably constant inclination angle which with regard to a radial plane to which the centre-axis (M) is a plane normal, is located acutely and is greater than the first inclination angle.

10. The drilling head according to any one of the Claims 4 to 9, **characterized in that** a minor cutting edge (125, 225, 325, 425, 525, 625, 725) formed on the face end crosses the main cutting edge (111, 211, 311, 411, 511, 611, 711) in the centre axis (M) and extends towards the V-shaped lateral faces (109, 209, 309, 409, 509, 609, 709), wherein more preferably the minor cutting edge (125, 225, 325, 425, 525, 625, 725) and the main cutting edge terminate in a common more preferably substantially pointed tip through which the centre axis (M) runs, so that more preferably the face end (105, 205, 305, 405, 505, 605, 705) at least partially is pyramid-shaped, wherein more preferably both the minor cutting edge (125, 225, 325, 425, 525, 625, 725) as well as the main cutting edge (111, 211, 311, 411, 511, 611, 711) are inclined towards a radial plane to which the centre axis (M) is a plane normal.

11. The drilling head according to Claim 10, **characterized in that** the minor cutting edge (325) is curved radially, more preferably radially in such a manner that the minor cutting edge (325) in top view has an S-shape.

12. The drilling head according to Claim 10 or 11, **characterized in that** the minor cutting edge (325) is curved axially concavely.

13. The drilling head according to any one of the Claims 1 to 12, **characterized in that** it forms a substantially prismatic body with a substantially X-shaped basic shape in top view, which is defined by the V-shaped lateral faces (109, 209, 309, 409, 509, 609, 709) located opposite each other.

14. The drilling head according to any one of the Claims 1 to 13, **characterized in that** an obtuse angle greater than 140°, preferentially greater than 145°, more preferably greater than 150°, for example at approximately 152° lies between the two face legs of the V-shaped lateral face (109, 209, 309, 409, 509, 609, 709), more preferably both V-shaped lateral faces.

15. The drilling head according to Claim 13 or 14, **characterized in that** the body comprises a radial constriction (121, 221, 321, 421, 521, 621, 721) substantially at the height of the axis (M), wherein more preferably the radial width of the constriction (121, 221, 321, 421, 521, 621, 721) corresponds to at least 30%, preferentially at least over 40%, more preferably over 50% of the radial maximum width of the body in the region of the peripheral side (107, 207, 307, 407, 507, 607, 707).

16. The drilling head according to any one of the Claims 13 to 15, **characterized in that** the body is formed of a hard metal piece, more preferably sintered.

17. A drilling tool more preferably for rock and/or concrete with a drilling head (101, 201, 301, 401, 501, 601, 701) formed according to one of the Claims 1 to 16, whose assembly side (103, 203, 303, 403, 503, 603, 703) facing the drilling tool is to be attached to a face end of a shaft of the drilling tool, more preferably to be inserted and fastened in, more preferably soldered in a slot in the face end.

## Revendications

1. Tête de forage destinée à un outil de forage, notamment une foreuse à roche et/ou à béton, comportant un axe médian (M), qui en l'état monté de la tête de forage (101, 201, 301, 401, 601, 701) coïncide avec l'axe d'outil de forage, un côté de montage (103, 203, 303, 403, 603, 703) tourné vers l'outil de forage, sur lequel la tête de forage peut être montée à une extrémité frontale de l'outil de forage, un côté frontal (105, 205, 305, 405, 605, 705) diamétralement opposé au côté de montage (103,203,303,403,603,703), sur lequel au moins un tranchant est disposé, deux surfaces latérales en forme de V (109, 209, 309, 409, 609, 709), diamétralement opposées, délimitant une rainure d'évacuation s'étendant essentiellement dans la direction axiale et deux côtés périphériques (107, 207, 307, 407, 607, 707) diamétralement opposés, s'étendant dans la direction axiale, qui se trouvent entre les deux surfaces latérales en forme de V (109, 209, 309, 409, 609, 709), **caractérisée en ce que** au moins un des côtés périphériques (107, 207, 307, 407, 607, 707), de préférence les deux côtés périphériques (107, 207, 307, 407, 607, 707), présente une courbure convexe radiale avec un rayon par rapport à l'axe médian (M), qui diminue régulièrement en continu dans une direction circonférentielle le long du côté périphérique total (107, 207, 307, 407, 607, 707).

2. Tête de forage selon la revendication 1, **caractérisée en ce que** au moins un des côtés périphériques (107, 207, 307, 407, 607, 707), de préférence les deux côtés périphériques (107, 207, 307, 407, 607, 707), est/sont exempts d'une rainure d'évacuation concave.

3. Tête de forage selon la revendication 1 ou 2, **caractérisée en ce que** au moins un des côtés périphériques (107, 207, 307, 407, 607, 707), de préférence les deux côtés périphériques, présente une arête axiale d'attaque dans la direction de rotation et une arête axiale de fuite dans la direction de rotation (ω), moyennant quoi le rayon de l'arête axiale de fuite est refoulé radialement par rapport au rayon de l'arête axiale d'attaque et le rayon diminue régulièrement en continu de manière minime le long du côté périphérique convexe radial (107, 207, 307, 407, 607, 707) entre le bord d'attaque axial et le bord de fuite axial.

4. Tête de forage selon une des revendications 1 à 3, **caractérisée en ce que** un tranchant principal s'étend en ligne droite à partir de l'axe médian (M) sur le côté frontal (105, 205, 305, 405, 505, 605, 705) et s'étend radialement en allant vers les deux côtés périphériques (107, 207, 307, 407, 607, 707).

5. Tête de forage selon la revendication 4, **caractérisée en ce que** le tranchant principal (111, 211, 311, 411, 511, 611, 711) divise en tant que diagonale le côté frontal en deux ailes de côté frontal notamment identiques, qui descend du tranchant principal (111, 211, 311, 411, 511, 611, 711) en allant vers les surfaces latérales en forme de V respectives (109, 209, 309, 409, 509, 609, 709).

6. Tête de forage selon la revendication 4 ou 5, **caractérisée en ce que** une aile de côté frontal est bombée de manière concave axialement et notamment l'autre aile de côté frontal est plane, de préférence les deux ailes de côté frontal sont bombées de manière concave axialement.

7. Tête de forage selon une des revendications 4 à 6, **caractérisée en ce que** sur une aile frontale, au moins une protubérance radiale, de préférence deux protubérances radiales, présente respectivement un tranchant annexe, qui s'étend de la surface latérale en forme de V (709) au moins partiellement jusqu'au tranchant principal (711).

8. Tête de forage selon une des revendications 4 à 7, **caractérisée en ce que** le tranchant principal (111, 211, 311, 411, 511, 611, 711) en tant que diagonale du côté frontal (105, 205, 305, 405, 605, 705) débouche dans un côté périphérique (107, 207, 307, 407, 507, 607, 707), de préférence dans les deux côtés périphériques.

9. Tête de forage selon une des revendications 4 à 8, **caractérisée en ce que** le tranchant principal (311, 411, 511, 611) présente pour une portion périphérique un premier angle d'inclinaison notamment constant et pour une portion d'axe médian un deuxième angle d'inclinaison notamment constant, qui forme un angle aigu par rapport à un plan radial, auquel l'axe médian (M) est une normale de plan, et est plus grand que le premier angle d'inclinaison.

10. Tête de forage selon une des revendications 4 à 9, **caractérisée en ce que** un tranchant annexe (125, 225, 325, 425, 525, 625, 725) réalisé sur le côté frontal croise le tranchant principal (111, 211, 311, 411, 511, 611, 711) dans l'axe médian (M) et s'étend par rapport aux surfaces latérales en forme de V (109, 209, 309, 409, 509, 609, 709), moyennant quoi notamment le tranchant annexe (125, 225, 325, 425, 525, 625, 725) et le tranchant principal débouchent dans une pointe commune, notamment essentiellement en forme de point, à travers laquelle s'étend l'axe médian (M), de sorte que notamment le côté frontal (105, 205, 305, 405, 505, 605, 705) soit au moins partiellement de forme pyramidale, moyennant quoi notamment tant le tranchant annexe (125, 225, 325, 425, 525, 625, 725) que le tranchant principal (111, 211, 311, 411, 511, 611, 711) sont inclinés par rapport à un plan radial, auquel l'axe médian (M) est une normale de plan.

11. Tête de forage selon la revendication 10, **caractérisée en ce que** le tranchant annexe (325) est courbé radialement, notamment de telle sorte que le tranchant annexe (325) présente en vue de dessus une forme de S.

12. Tête de forage selon la revendication 10 ou 11, **caractérisée en ce que** le tranchant annexe (325) est bombé de manière concave axialement.

13. Tête de forage selon une des revendications 1 à 12, **caractérisée en ce que** elle forme un corps essentiellement prismatique, avec une forme fondamentale essentiellement en forme de X en vue de dessus, qui est déterminé par les surfaces latérales en forme de V opposées (109, 209, 309, 409, 509, 609, 709).

14. Tête de forage selon une des revendications 1 à 13, **caractérisée en ce que** un angle obtus plus grand que 140°, de préférence plus grand que 145°, notamment plus grand que 150°, par exemple d'environ 152° est situé entre les deux pans de surface des surfaces latérales en forme de V (109, 209, 309, 409, 509, 609, 709), notamment les deux surfaces latérales en forme de V.

15. Tête de forage selon la revendication 13 ou 14, **caractérisée en ce que** le corps présente un rétrécissement radial (121, 221, 312, 421, 521, 621, 721) essentiellement à la hauteur de l'axe médian (M), moyennant quoi notamment la largeur radiale du rétrécissement (121, 221, 312, 421, 521, 621, 721) correspond au moins à 30%, de préférence au moins à plus de 40%, notamment plus de 50%, de la largeur maximale radiale du corps au niveau des côtés périphériques (107, 207, 307, 407, 507, 607, 707).

16. Tête de forage selon une des revendications 13 à 15, **caractérisé en ce que** le corps est façonné dans une pièce en métal dur, notamment fritté.

17. Outil de forage notamment de pierres et/ou de béton comportant une tête de forage (101, 201, 301, 401, 501, 601, 701) configurée selon une des revendications 1 à 16, dont le côté de montage tourné vers l'outil de forage (103, 203, 303, 403, 503, 603, 703) doit être monté sur une extrémité avant d'une queue de l'outil de forage, notamment placé dans une rainure à l'extrémité frontale et est fixé, notamment soudé.
